# EUROPEAN PATENT SPECIFICATION

(11) **EP 3 169 548 B1**
(45) Date of publication and mention of the grant of the patent: **28.02.2024**
(21) Application number: 14886477.0
(22) Date of filing: 30.12.2014
(51) Int. Cl.: B60Q 3/80

(54) **METHOD, APPARATUS AND SYSTEM FOR CHANGING AMBIENT LIGHT IN A VEHICLE**
VERFAHREN, VORRICHTUNG UND SYSTEM ZUM ÄNDERN DES UMGEBUNGSLICHTS IN EINEM FAHRZEUG
PROCÉDÉ, APPAREIL ET SYSTÈME POUR CHANGER UNE LUMIÈRE AMBIANTE DANS UN VÉHICULE

(30) Priority: 21.03.2014 WO PCT/CN2014/073870
(43) Date of publication of application: 24.05.2017
(73) Proprietor: Volkswagen Aktiengesellschaft, 38440 Wolfsburg (DE)
(72) Inventor: LOASBY, Simon, Shanghai 201107 (CN)
(86) International application number: PCT/CN2014/095496
(87) International publication number: WO 2015/139499

(56) References cited:
- WO-A1-2013/121311
- CN-U- 203 472 663
- DE-A1- 10 006 943
- DE-A1-102006 052 777
- DE-A1-102011 115 168
- DE-A1-102012 001 051
- DE-A1-102012 002 564
- JP-A- 2003 072 463
- US-A1- 2003 227 778
- US-A1- 2009 016 073
- US-B1- 6 536 928

## Description

### TECHNICAL FIELD

The present invention relates to a vehicle, and in particular to method, apparatus and system for changing ambient light in a vehicle.

### BACKGROUND

There are various light emitting sources in a vehicle passenger compartment of a vehicle, which are referred to the light emitting sources in the vehicle. Non-limited examples of the light emitting sources in the vehicle may include background light for an engine tachometer, a speedometer, a screen of an in-vehicle navigation system, a screen of an in-vehicle radio, an overhead lamp mounted on an overhead console of the vehicle, and/or a rear lamp mounted on a rear portion of the ceiling of the vehicle. Lights emitted by the light emitting sources in the vehicle form ambient light in the vehicle.

An illumination color of the light emitting sources in the vehicle is set when the vehicle is manufactured and can not be adjusted by a user of the vehicle (e.g., a driver or a passenger of the vehicle), so the user of the vehicle can not personalize the ambient light in the vehicle.

The documents DE 10 2012 002 564A1 and DE 10 2006 052 777 A1 disclose a method for adjusting illumination colors of an interior of a vehicle by capturing the color of a garment of a passenger of the vehicle, e. g. by means of a camera.

### SUMMARY

In consideration of the defects in the prior art, embodiments of the present invention provide a method, apparatus and system for changing ambient light in a vehicle, by which the user of the vehicle can personalize the ambient light in the vehicle.

A method for changing ambient light in a vehicle according to an embodiment of the invention as defined in claim 1 comprises: obtaining a color preference of a user of the vehicle; and setting an illumination color of at least one of light emitting sources located within the vehicle based on the color preference, to change ambient light in the vehicle.

Wherein the step of obtaining a color preference of a user of the vehicle further comprises obtaining a color of an object associated with the user as the color preference.

Wherein the object associated with the user is an object indicated by the user.

Wherein the step of obtaining the color further comprises: obtaining the color of the object through a photo of the object which is taken by a camera.

Wherein the camera is installed in the vehicle or on a portable terminal.

Wherein the object is clothes of the user.

Wherein the user is a driver or a passenger of the vehicle.

The method further comprises: receiving, after the ambient light in the vehicle is changed, a color option selected by the user; and setting the illumination color of the at least one of the light emitting sources based on the color option, to adjust the ambient light in the vehicle.

An apparatus for changing ambient light in a vehicle according to an embodiment of the invention as defined in claim 4 comprises: an obtaining module for obtaining a color preference of a user of the vehicle; and a setting module for setting an illumination color of at least one of light emitting sources located within the vehicle based on the color preference, to change ambient light in the vehicle.

Wherein the obtaining module is further configured to obtain a color of an object associated with the user as the color preference.

Wherein the object associated with the user is an object indicated by the user.

Wherein the obtaining module is further configured to obtain the color of the object through a photo of the object which is taken by a camera.

Wherein the camera is installed in the vehicle or on a mobile terminal.

Wherein the object is clothes of the user.

Wherein the user is a driver or a passenger of the vehicle.

The apparatus further comprises a receiving module for receiving, after the ambient light in the vehicle is changed, a color option selected by the user, and wherein the setting module is also configured to set the illumination color of the at least one of the light emitting sources based on the color option, to adjust the ambient light in the vehicle.

A system for changing ambient light in a vehicle according to an embodiment of the invention comprises a controlling device configured to obtain a color preference of a user of the vehicle, and set an illumination color of at least one of light emitting sources located within the vehicle based on the color preference, to change ambient light in the vehicle.

Wherein the controlling device is further configured to obtain a color of an object associated with the user as the color preference.

Wherein the object associated with the user is an object indicated by the user.

Wherein the controlling device is further configured to obtain the color of the object through a photo of the object which is taken by a camera of a mobile terminal.

The system further comprises a camera installed in the vehicle and configured to take a photo of the object, and wherein the controlling device is further configured to obtain the color of the object through the photo of the object.

Wherein the object is clothes of the user.

Wherein the user is a driver or a passenger of the vehicle.

The system further comprises a switch installed in the vehicle and configured to select, by the user, a color option after the ambient light in the vehicle is changed, and wherein the controlling device is further configured to receive the color option from the switch, and set the illumination color of the at least one of the light emitting sources based on the color option, to adjust the ambient light in the vehicle.

It can be seen from the above description that in embodiments of the invention, the ambient light in the vehicle can be changed based on the color preference of the user of the vehicle. Therefore, compared with the prior art, the present invention enables the user of the vehicle to personalize the ambient light in the vehicle.

### DESCRIPTION OF DRAWINGS

The above and other features and advantages of the present invention will become more apparent from the following detailed description made with reference to the accompanying drawings. In the drawings:
Fig. 1 illustrates a schematic diagram of a system for changing ambient light in a vehicle according to an embodiment of the present invention;
Fig. 2 illustrates a flowchart of a method for changing ambient light in a vehicle according to an embodiment of the present invention; and
Fig. 3 illustrates a schematic diagram of an apparatus for changing ambient light in a vehicle according to an embodiment of the present invention.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) can be practiced without these specific details.

Embodiments of the present invention provide a solution for changing ambient light in a vehicle, in which a color preference of a user of the vehicle is obtained and an illumination color of at least one of light emitting sources in the vehicle is set based on the color preference so as to change the ambient light in the vehicle. Since the solution allows to change the ambient light in the vehicle based on the color preference of the user of the vehicle, the user of the vehicle can personalize the ambient light in the vehicle, which will make the user of the vehicle to feel more comfortable and give him/she a feeling of personal space which is unique.

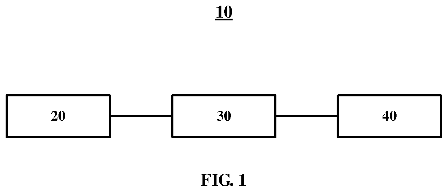

Fig. 1 illustrates a schematic diagram of a system for changing ambient light in a vehicle according to an embodiment of the present invention. As shown in Fig. 1, the system 10 for changing ambient light in a vehicle T may include a camera 20, a controlling device 30 and a switch 40.

The camera 20 is installed in the vehicle T and is configured to take a photo of clothes of the user of the vehicle T. The user of the vehicle T may be a driver of the vehicle T or a passenger of the vehicle T.

The controlling device 30 is configured to receive the photo taken by the camera 20, obtain a color of the clothes of the user of the vehicle T by analyzing the received photo as the color preference of the user of the vehicle T, and set an illumination color of light emitting sources in the vehicle T based on the color preference so as to change the ambient light in the vehicle T. The controlling device 30 may be any one of existing electronic control units (ECUs) of the vehicle T or a new ECU different from any one of the existing ECUs of the vehicle T.

The switch 40 is installed in the vehicle T and may be used to adjust the ambient light in the vehicle T manually by the user of the vehicle T after the ambient light in the vehicle T is changed. Specifically, after the ambient light in the vehicle T is changed, if for example the user of the vehicle T does not satisfy the ambient light in the vehicle T, the user of the vehicle T may operate the switch 40 to select a color option (e.g., blue, green or the like) the user of the vehicle T desires. The controlling device 30 then receives the color option selected by the user of the vehicle T from the switch 40, and sets the illumination color of light emitting sources in the vehicle T based on the received color option so as to adjust the ambient light in the vehicle T.

### Other Modifications

It should be appreciated that in the above embodiment, the system 10 includes the switch 40 for adjusting the ambient light in the vehicle T manually by the user of the vehicle T after the ambient light in the vehicle T is changed, but the invention is not so limited. In other some embodiments of the invention, the system 10 also may not include the switch 40.

It should be appreciated that in the above embodiment, the color of the clothes of the user of the vehicle T as an object associated with the user of the vehicle T is used as the color preference of the user of the vehicle T, but in the invention, the object associated with the user of the vehicle T is not limited to the clothes of the user of the vehicle T. In other some embodiments of the invention, the object associated with the user of the vehicle T may also be a flower, a book, a painting, a bag or the like.

It should be appreciated that the object associated with the user of the vehicle T may further be an object indicated by the user of the vehicle T. Apparently, the object indicated by the user of the vehicle T may be clothes of the user of the vehicle T, a flower, a book, a painting, a bag or the like.

It should be appreciated that in the above embodiments, the photo for obtaining the color of the object associated with the user of the vehicle T is provided by the camera 20 installed in the vehicle T, but the invention is not so limited. In other some embodiments of the invention, the system 10 does not include the camera 20 and the photo for obtaining the color of the object associated with the user of the vehicle T is provided by other device not installed in the vehicle T. For example, the photo for obtaining the color of the object associated with the user of the vehicle T may be provided by a portable terminal with a camera, wherein the portable terminal may be a cell phone, a tablet PC, a camera not installed in the vehicle T or the like. In case that the photo for obtaining the color of the object associated with the user of the vehicle T is provided by the portable terminal with the camera, the user of the vehicle T uses the camera of the portable terminal to take the photo of the object associated with the user of the vehicle T and the portable terminal then sends the photo to the controlling device 30 via a wired connection or a wireless connection.

It should be appreciated that in the above embodiments, the color preference of the user of the vehicle T is the color of the object associated with the user of the vehicle T, but the invention is not so limited. In other some embodiments of the invention, the color preference of the user of the vehicle T may also be the color inputted by the user of the vehicle T for example via a device installed in the vehicle T, a portable terminal or the like.

It should be appreciated that in the above embodiments, the illumination color of all of the light emitting sources in the vehicle T is set based on the color preference or the color option, but the invention is not so limited. In other some embodiments of the invention, the illumination color of only a portion of the light emitting sources in the vehicle T is set based on the color preference or the color option.

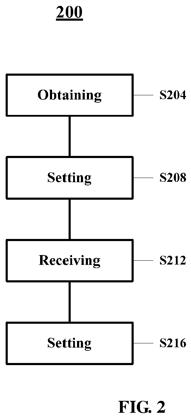

Fig. 2 illustrates a flowchart of a method for changing ambient light in a vehicle according to an embodiment of the present invention. The method 200 shown in Fig. 2 may be performed by the controlling device 30.

As shown in Fig. 2, a color preference of a user of the vehicle is obtained at step S204.

At step S208, an illumination color of at least one of light emitting sources located within the vehicle is set based on the color preference so as to change ambient light in the vehicle.

In an implementation of the invention, the step S204 further includes obtaining a color of an object associated with the user of the vehicle as the color preference.

In an implementation of the invention, the object associated with the user of the vehicle is an object indicated by the user of the vehicle.

In an implementation of the invention, the step S204 further includes obtaining the color through a photo of the object which is taken by a camera.

In an implementation of the invention, the camera is installed in the vehicle or on a portable terminal.

In an implementation of the invention, the object is clothes of the user of the vehicle.

In an implementation of the invention, the user of the vehicle is a driver or a passenger of the vehicle.

In an implementation of the invention, the method further includes : step S212 for receiving, after the ambient light in the vehicle is changed, a color option selected by the user of the vehicle; and step S216 for setting the illumination color of the at least one of the light emitting sources based on the color option, to adjust the ambient light in the vehicle.

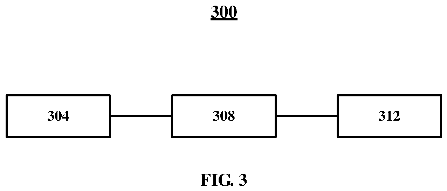

Fig. 3 illustrates a schematic diagram of an apparatus for changing ambient light in a vehicle according to an embodiment of the present invention. The apparatus 300 shown in Fig. 3 may be installed in the controlling device 30 and may be implemented by software, hardware (e.g., an integrated circuit, a field programmable gate array (FPGA) or the like) or combination of software and hardware.

As shown in Fig. 3, the apparatus 300 may include an obtaining module 304 and a setting module 308. The obtaining module 304 is configured to obtain a color preference of a user of the vehicle. The setting module 308 is configured to set an illumination color of at least one of light emitting sources located within the vehicle based on the color preference obtained by the obtaining module 304, to change ambient light in the vehicle.

In an implementation of the invention, the obtaining module 304 is further configured to obtain a color of an object associated with the user of the vehicle as the color preference.

In an implementation of the invention, the object associated with the user of the vehicle is an object indicated by the user of the vehicle.

In an implementation of the invention, the obtaining module 304 is further configured to obtain the color of the object through a photo of the object which is taken by a camera.

In an implementation of the invention, the camera is installed in the vehicle or on a mobile terminal.

In an implementation of the invention, the object is clothes of the user of the vehicle.

In an implementation of the invention, the user of the vehicle is a driver or a passenger of the vehicle.

In an implementation of the invention, the apparatus 300 further includes a receiving module 312 configured to receive, after the ambient light in the vehicle is changed, a color option selected by the user, and wherein the setting module 308 is also configured to set the illumination color of the at least one of the light emitting sources based on the color option, to adjust the ambient light in the vehicle.

A computer program product including a computer-readable medium comprising codes may be provided for causing a computer to execute steps included in the method 200.

Although particular embodiments of the invention have been described in detail for purposes of illustration, various modifications and enhancements may be made without departing from the scope of the invention. Accordingly, the invention is not limited except as by the appended claims.

## Claims

1. A method (200) for changing ambient light in a vehicle, comprising: obtaining (S204) a color preference of a user of the vehicle; and setting (S208) an illumination color of at least one of light emitting sources located within the vehicle based on the color preference by a controlling device (30) of the vehicle, to change ambient light in the vehicle (T), wherein the step of obtaining (S204) a color preference of a user of the vehicle further comprising: obtaining a color of an object associated with the user as the color preference and obtaining the color through a photo of the object which is indicated by the user and taken by a camera (20) by a user, **characterized in that** the camera (20) is installed on a portable terminal, and wherein the portable terminal sends the photo to the controlling device (30) via a wired connection or a wireless connection, wherein receiving (S212), after the ambient light in the vehicle is changed, a color option selected by the user; and setting (S216) the illumination color of the at least one of the light emitting sources based on the color option, to adjust the ambient light in the vehicle.

2. The method (200) of claim 1, wherein the object is clothes of the user.

3. The method (200) of claim 1, wherein the user is a driver or a passenger of the vehicle.

4. An apparatus (300) for changing ambient light in a vehicle, comprising:
an obtaining module (304) for obtaining a color preference of a user of the vehicle; and a setting module (308) for setting an illumination color of at least one of
light emitting sources located within the vehicle based on the color preference, to change ambient light in the vehicle, wherein the obtaining module is further configured to obtain a color of an object associated with the user as the color preference, and wherein the obtaining module is further configured to obtain the color through a photo of the object which is taken by a camera (20),
**characterized in that** the camera (20) is installed on a portable terminal, wherein the apparatus (300) further comprising a receiving module (312) for receiving, after the ambient light in the vehicle is changed, a color option selected by the user,
wherein the setting module (308) is also configured to set the illumination color of the at least one of the light emitting sources based on the color option, to adjust the ambient light in the vehicle.

## Patentansprüche

1. Verfahren (200) zum Verändern des Umgebungslichts in einem Fahrzeug, das Folgendes umfasst:
Erhalten (S204) einer Farbpräferenz eines Benutzers des Fahrzeugs; und
Einstellen (S208) einer Beleuchtungsfarbe von mindestens einer der innerhalb des Fahrzeugs angeordneten lichtemittierenden Quellen basierend auf der Farbpräferenz durch eine Steuervorrichtung (30) des Fahrzeugs, um das Umgebungslicht in dem Fahrzeug (T) zu ändern, wobei der Schritt des Erhaltens (S204) einer Farbpräferenz eines Benutzers des Fahrzeugs ferner umfasst: Erhalten einer Farbe eines dem Benutzer zugeordneten Objekts als die Farbpräferenz und Erhalten der Farbe durch ein Foto des Objekts, das von dem Benutzer angegeben und von einer Kamera (20) von einem Benutzer aufgenommen wird,
**dadurch gekennzeichnet, dass** die Kamera (20) auf einem tragbaren Endgerät installiert ist, und
wobei das tragbare Endgerät das Foto über eine drahtgebundene Verbindung oder eine drahtlose Verbindung an das Steuergerät (30) sendet, wobei eine vom Benutzer ausgewählte Farboption empfangen wird (S212), nachdem das Umgebungslicht im Fahrzeug verändert wurde; und
Einstellen (S216) der Beleuchtungsfarbe der zumindest einen der Licht emittierenden Quellen basierend auf der Farboption, um das Umgebungslicht im Fahrzeug anzupassen.

2. Verfahren (200) nach Anspruch 1, wobei das Objekt die Bekleidung des Benutzers ist.

3. Verfahren (200), wobei der Benutzer ein Fahrer oder ein Fahrgast des Fahrzeugs ist.

4. Vorrichtung (300) zum Verändern des Umgebungslichts in einem Fahrzeug, das Folgendes umfasst:
ein Erhaltungsmodul (304) zum Erhalten einer Farbpräferenz eines Benutzers des Fahrzeugs; und ein Einstellmodul (308) zum Einstellen einer Beleuchtungsfarbe von mindestens einer von in dem Fahrzeug befindlichen Licht emittierenden Quellen basierend auf der Farbpräferenz, um das Umgebungslicht in dem Fahrzeug zu verändern, wobei das Erhaltungsmodul ferner dazu ausgelegt ist
eine Farbe eines dem Benutzer zugeordneten Objekts als Farbpräferenz zu erhalten, und
wobei das Erhaltungsmodul ferner dazu ausgelegt ist, die Farbe durch ein Foto des Objekts zu erhalten, das von einer Kamera (20) aufgenommen wird,
**dadurch gekennzeichnet, dass** die Kamera (20) auf einem tragbaren Endgerät installiert ist, wobei die Vorrichtung (300) ferner ein Empfangsmodul (312) zum Empfangen einer vom Benutzer ausgewählten Farboption umfasst, nachdem das Umgebungslicht im Fahrzeug verändert wurde,
wobei das Einstellmodul (308) auch dazu ausgelegt ist, die Beleuchtungsfarbe der zumindest einen der Licht emittierenden Quellen basierend auf der Farboption einzustellen, um das Umgebungslicht im Fahrzeug anzupassen.

## Revendications

1. Procédé (200) pour changer la lumière ambiante dans un véhicule, comprenant :
l'obtention (S204) d'une préférence de couleur d'un utilisateur du véhicule ; et
la définition (S208) d'une couleur d'éclairage d'au moins l'une de sources d'émission de lumière localisées à l'intérieur du véhicule sur la base de la préférence de couleur au moyen d'un dispositif de commande (30) du véhicule, pour changer la lumière ambiante dans le véhicule (T), dans lequel l'étape d'obtention (S204) d'une préférence de couleur d'un utilisateur du véhicule comprend en outre : l'obtention d'une couleur d'un objet associé à l'utilisateur en tant que préférence de couleur et l'obtention de la couleur par l'intermédiaire d'une photographie de l'objet qui est indiquée par l'utilisateur et qui est prise par une caméra (20) par un utilisateur ;
**caractérisé en ce que** la caméra (20) est installée sur un terminal portable, et dans lequel le terminal portable envoie la photographie au dispositif de commande (30) via une connexion filaire ou une connexion sans fil, comprenant la réception (S212), après que la lumière ambiante dans le véhicule est changée, d'une option de couleur sélectionnée par l'utilisateur ; et la définition (S216) de la couleur d'éclairage de l'au moins une des sources d'émission de lumière sur la base de l'option de couleur, pour régler la lumière ambiante dans le véhicule.

2. Procédé (200) selon la revendication 1, dans lequel l'objet est des vêtements de l'utilisateur.

3. Procédé (200) selon la revendication 1, dans lequel l'utilisateur est un conducteur ou un passager du véhicule.

4. Appareil (300) pour changer la lumière ambiante dans un véhicule, comprenant :
un module d'obtention (304) pour obtenir une préférence de couleur d'un utilisateur du véhicule ; et un module de définition (308) pour définir une couleur d'éclairage d'au moins l'une de sources d'émission de lumière localisées à l'intérieur du véhicule sur la base de la préférence de couleur, pour changer la lumière ambiante dans le véhicule, dans lequel le module d'obtention est en outre configuré pour obtenir une couleur d'un objet associé à l'utilisateur en tant que préférence de couleur, et dans lequel le module d'obtention est en outre configuré pour obtenir la couleur par l'intermédiaire d'une photographie de l'objet qui est prise par une caméra (20),
**caractérisé en ce que** la caméra (20) est installée sur un terminal portable, dans lequel l'appareil (300) comprend en outre un module de réception (312) pour recevoir, après que la lumière ambiante dans le véhicule est changée, une option de couleur sélectionnée par l'utilisateur,
dans lequel le module de définition (308) est également configuré pour définir la couleur d'éclairage de l'au moins une des sources d'émission de lumière sur la base de l'option de couleur, pour régler la lumière ambiante dans le véhicule.
